# FASCICULE DE BREVET EUROPEEN

(11) **EP 1 109 688 B1**
(45) Date de publication et mention de la délivrance du brevet: **09.11.2005**
(21) Numéro de dépôt: 00949670.4
(22) Date de dépôt: 07.07.2000
(51) Int. Cl.: B60H 1/00, H02P 8/14

(54) **DISPOSITIF DE CHAUFFAGE, VENTILATION ET/OU CLIMATISATION DONT AU MOINS UN ORGANE MOBILE EST COMMANDE PAR UN MOTEUR UNIPOLAIRE**
VORRICHTUNG FÜR DIE HEIZUNG, LÜFTUNG UND/ODER KLIMATISIERUNG MIT WENIGSTENS EINEM BEWEGLICHEM ORGAN, DAS VON EINEM UNIPOLARMOTOR KONTROLLIRT WIRD
HEATING, VENTILATING AND/OR AIR CONDITIONING DEVICE WITH AT LEAST ONE MOBILE ELEMENT CONTROLLED BY A SINGLE-POLE MOTOR

(30) Priorité: 08.07.1999 FR 9908856
(43) Date de publication de la demande: 27.06.2001
(73) Titulaire: VALEO SYSTEMES THERMIQUES, 78320 Le Mesnil Saint-Denis (FR)
(72) Inventeur: ADER, Denis, F-91180 Bruyère le Chatel (FR)
(74) Mandataire: Lemaire, Marc
(86) Numéro de dépôt international: PCT/FR2000/001963
(87) Numéro de publication internationale: WO 2001/003959

(56) Documents cités:
- EP-A- 0 769 845
- DE-A- 4 305 086
- DE-A- 4 444 810
- FR-A- 2 550 668

## Description

La présente invention a pour objet un dispositif de chauffage, ventilation et/ou climatisation comportant au moins un organe mobile dont le déplacement est commandé par un moteur unipolaire alimenté par un dispositif de commande.

Dans les dispositifs connus, les organes mobiles tels que les volets peuvent être commandés par un moteur unipolaire qui est alimenté à une fréquence de travail donnée par un circuit de commande qui régule la tension de commande à une valeur donnée, afin par exemple de faire face aux variations de la tension de la batterie. Un tel concept nécessite des circuits analogiques supplémentaires sur la carte de commande, d'où augmentation du coût du dispositif ainsi qu'une perte de place.

Ces moteurs unipolaires sont généralement commandés par un calculateur qui peut être commun à divers organes du véhicule (climatisation ou chauffage, lunette arrière chauffante, pare-brise électrique,, injection moteur, etc.). Le couple de sortie qu'ils fournissent varie de manière importante notamment en fonction de la température et de la tension de la batterie.

L'invention a pour but de commander le fonctionnement du moteur pour en faire varier le couple sur un paramètre qui n'est pas la tension, sans complication notable de la structure et donc du coût et de l'encombrement.

L'idée de base de l'invention est d'utiliser comme paramètre la fréquence de commande du moteur unipolaire. Le couple de ce type de moteur varie notablement en fonction de la fréquence de pilotage : toutes choses égales par ailleurs, le couple de sortie d'un moteur unipolaire augmente lorsque la fréquence de pilotage (avantageusement comprise entre 50 Hz et 200 Hz) diminue. Une telle fréquence de pilotage (par exemple sous forme d'un signal carré) est facile à générer à l'aide d'un calculateur.

Le document FR 2 550 668 divulgue un procédé qui comporte un moyen de comparaison comparant la tension fournie par une alimentation à une valeur de référence pour commander un moyen de commande qui modifie la vitesse d'un organe de manoeuvre.

L'invention concerne un dispositif de chauffage, ventilation et/ou climatisation comportant au moins un organe mobile dont le déplacement est commandé par un moteur unipolaire alimenté par un dispositif de commande caractérisé en ce que le dispositif de commande présente une entrée de réception d'un signal représentatif d'une température et une entrée d'un signal représentatif de la tension d'une batterie d'alimentation et en ce qu'il présente au moins une sortie pour générer une fréquence de pilotage du moteur unipolaire qui dépend du niveau desdits signaux représentatifs.

II est particulièrement avantageux que la fréquence de pilotage présente au moins deux valeurs discrètes pour au moins deux domaines de niveau de température et/ou de tension.

Selon un mode de réalisation préféré, le dispositif est caractérisé en ce que le dispositif de commande génère au moins un cycle d'hystérésis de température et en ce qu'au moins deux domaines de niveau de température sont délimités pour un dit cycle d'hystérésis entre un seuil bas d'hystérésis et un seuil haut d'hystérésis et/ou en ce que le dispositif génère au moins un cycle d'hystérésis relatif à la, tension de batterie et en ce qu'au moins deux domaines de niveau de tension de batterie sont délimités par un dit cycle d'hystérésis entre un seuil bas d'hystérésis et un seuil haut d'hystérésis.

Selon un mode de réalisation particulièrement avantageux,, au moins deux fréquences de pilotage sont multiples l'une de l'autre. Il est alors possible de la générer de manière très simple à partir d'une fréquence unique.

Le signal de température peut correspondre à la température extérieure Te, à la température intérieure Ti. de l'habitacle d'un véhicule automobile ou bien encore à une estimation de cette dernière température.

Le même dispositif de commande (par exemple calculateur) peut être mis en oeuvre pour commander une pluralité de moteurs unipolaires, par exemple les moteurs de commande des volets du dispositif de chauffage, ventilation et/ou climatisation.

D'autres caractéristiques et avantages de l'invention apparaîtront mieux à la lecture de la description qui va suivre, donnée à titre d'exemple non limitatif en liaison avec les dessins dans lesquels :
- la Figure 1 est une représentation schématique d'un dispositif selon l'invention;
- la Figure 2 illustre la variation du couple d'un moteur unipolaire en fonction de la température, selon trois fréquences de pilotage différentes et pour une même tension d'alimentation ;
- les Figures 3 à 5 illustrent des cycles d'hystérésis susceptibles d'être mis en oeuvre selon l'invention pour une commande respectivement en fonction de la température (avec un cycle d'hystérésis), de la tension et de la température (avec deux cycles d'hystérésis).
- la Figure 6 représente un organigramme de commande simplifiée en fonction de la tension et de la température ;
- la Figure 7 représente une commande en fonction de la tension et de la température, dont la Figure 8 est une variante avec hystérésis.

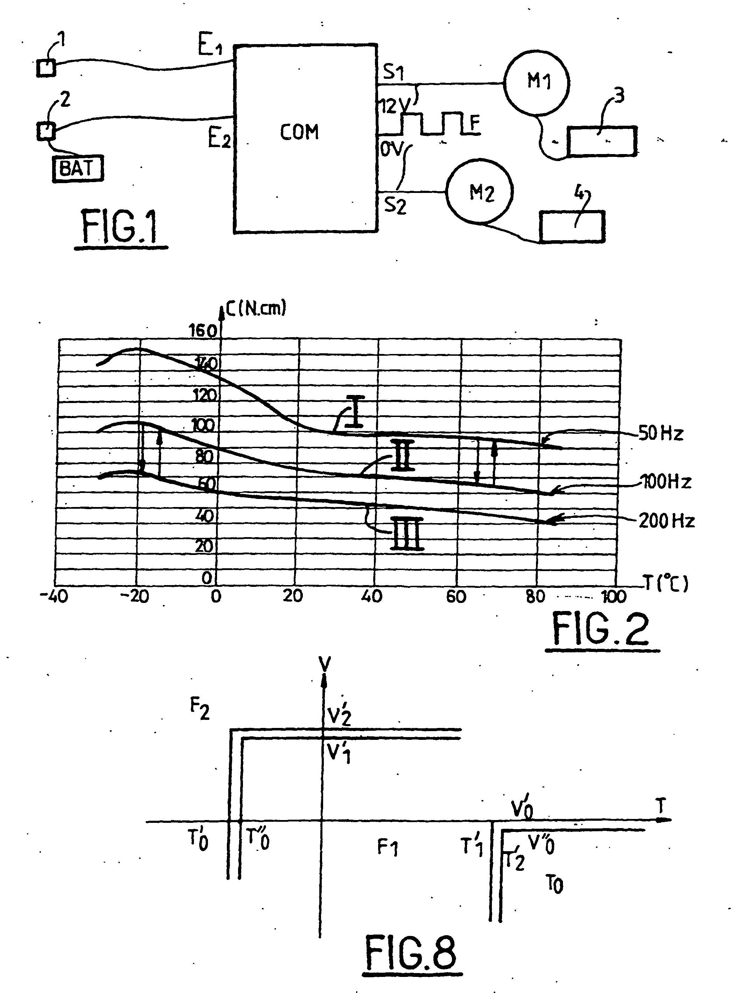

La Figure 1 représente un schéma d'un dispositif selon l'invention. Il comporte un dispositif de commande COM, qui est par exemple constitué par le calculateur d'un dispositif de climatisation, qui reçoit à deux de ses entrées respectivement E₁ et E₂ des signaux fournis par un capteur 1 de la température et/ou par un capteur 2 de la tension V_{B} de la batterie BAT du véhicule. La température mesurée peut être la température extérieure Te, la température intérieure Ti ou une valeur estimée de celle-ci. Les fonctions désirées (génération de signaux, cycle d'hystérésis) sont réalisées par un microprocesseur qui fait partie du dispositif COM. Un ou plusieurs moteurs unipolaires (M₁, M₂, ...) sont commandés à l'aide d'un signal périodique, par exemple un signal carré, d'amplitude nominale donnée, par exemple 12 V, et de fréquence F qui est délivré à une ou plusieurs sorties correspondantes (S₁, S₂, ...). A la Figure 1, on a représenté un moteur unipolaire M₁ qui actionne un volet de climatisation 3 qui peut être un volet d'entrée d'air ou de distribution d'air et un moteur M₂ qui actionne un volet 4 qui peut être un volet d'entrée d'air ou de distribution d'air. Ainsi qu'il est connu, un même moteur M₁ et/ou M₂ peut être utilisé pour entraîner plusieurs volets.

Si on laisse constants les paramètres d'alimentation du ou des moteurs, le couple de sortie est susceptible de varier de manière très importante aussi bien en fonction de la température que de la tension V_{B} de la batterie.

Par exemple, l'augmentation du couple à froid est susceptible de produire des efforts excessifs sur un organe qui peut être bloqué en butée en raison du gel. D'autre part, à température élevée, le couple peut s'avérer trop faible pour entraîner le déplacement d'un volet.

En pratique, un véhicule peut être amené à fonctionner entre des températures comprises entre -30°C et +50°C, alors que la tension de la batterie qui est par exemple de 12,5 V à l'arrêt, atteint 13 V à 14 V, voire 15 V ou 16 V, lorsque le moteur tourne. Elle peut également descendre aux environs de 11 V si le régulateur est défectueux.

Du fait de ces conditions extrêmes, le couple des moteurs peut varier d'un facteur qui peut atteindre 4, voire 7.

Il est certes possible de compenser au moins partiellement ces variations en régulant la tension de commande, mais, ainsi qu'il a été indiqué ci-dessus, ceci nécessite des circuits analogiques supplémentaires d'où l'augmentation du volume occupé ainsi que du coût.

L'invention tient compte du fait que le couple d'un moteur unipolaire varie en fonction de la fréquence d'alimentation, et qu'il est possible de faire varier cette fréquence sans qu'il soit nécessaire de compliquer notablement le dispositif. En effet, une telle variation de la fréquence F peut être notamment obtenue à l'aide d'un calculateur tel qu'il en existe déjà dans les dispositifs de climatisation.

A titre illustratif, la Figure 2 montre les courbes représentant le couple C (en N.cm) d'un moteur unipolaire donné en fonction de la température T (en °C) pour différentes fréquences F, à savoir 50 Hz (courbe I), 100 Hz (courbe II) et 200 Hz (courbe III).

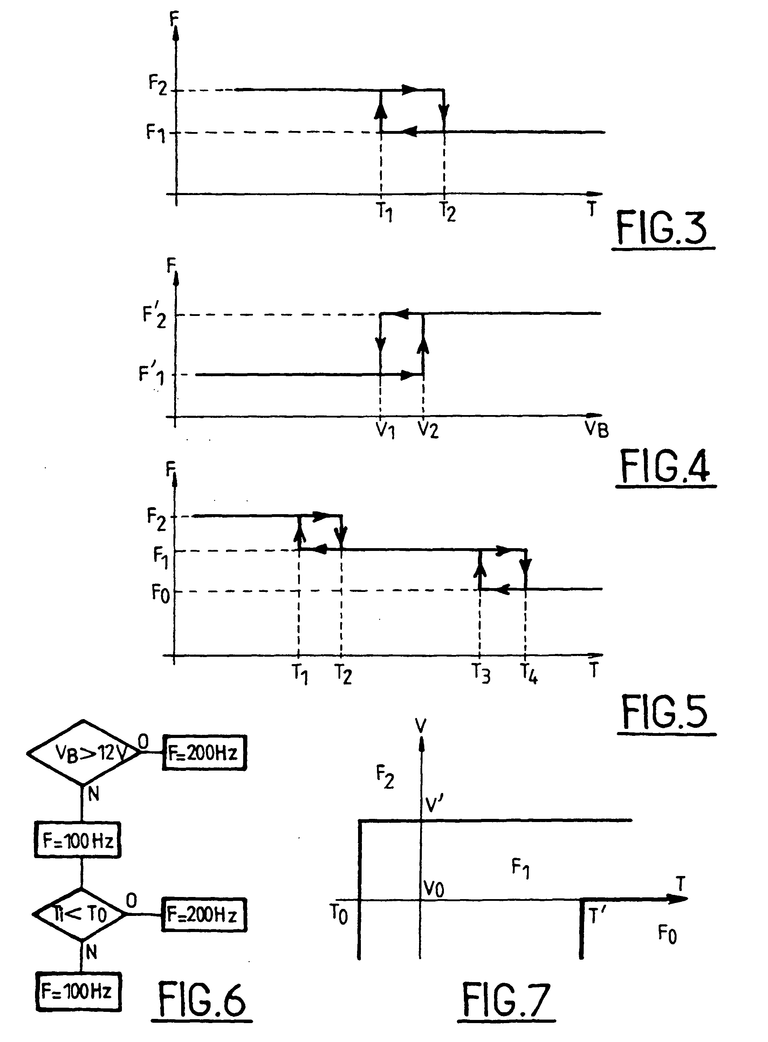

La Figure 3 illustre un mode de réalisation de l'invention pour lequel, lorsque la température est inférieure à T₁ (par exemple T₁ = -15°C), la fréquence de pilotage F est égale à F₂ (par exemple F₂ = 200 Hz). Par contre, lorsque la température est supérieure à T₂ (par exemple T₂ = -10°C), la fréquence F est égale à F₁ avec F₁ < F₂ (par exemple F₁ = 100 Hz), ce qui permet d'augmenter le couple.

Le cycle d'hystérésis, comme représenté à la Figure 2, permet lorsque la température augmente à partir d'une valeur inférieure à T₁ de maintenir la fréquence F à la valeur F₂ jusqu'à ce que T atteigne T₂, auquel cas elle commute à la valeur F₁, et lorsque la température diminue à partir d'une valeur supérieure à T₂; de maintenir la fréquence F à la valeur F₁ jusqu'à ce que T atteigne T₁ auquel cas elle commute à la valeur F₂.

La Figure 4 illustre un autre mode de réalisation de l'invention pour lequel, lorsque la tension V_{B} de la batterie est inférieure à V₁ (par exemple V₁ = 11 V), la fréquence F est égale à F'₁ (par exemple F'₁ = 100 Hz). Par contre, lorsque la tension V_{B} est supérieure à V₂ (par exemple V₂ = 12 V), la fréquence F est égale à F'₂ > F'₁ (avec par exemple F'₂ = 200 Hz). De la sorte, il est possible d'abaisser la fréquence F et donc d'augmenter le couple C lorsque la tension de batterie V_{B} devient anormalement faible. Le cycle d'hystérésis permet, lorsque V_{B} diminue à partir d'une valeur supérieure à V₂, de maintenir la valeur F'₂ jusqu'à ce que V_{B} atteigne V₁ et, lorsque V_{B} augmente à partir d'une valeur inférieure à V₁, de maintenir F à la valeur F'₁ jusqu'à ce que V_{B} atteigne V₂.

La Figure 5 représente un dispositif de commande en fonction de la température, qui présente deux seuils de température testés par des cycles à hystérésis, et trois valeurs possibles (F₀, F₁ et F₂) pour la fréquence F.

On aura par exemple F₀ = 50 Hz, F₁ = 100 Hz et F₂ = 200 Hz, et T₁ = -15°C, T₂ = -10°C, T₃ = 55°C et T₄ = 60°C.

Dans tous les cas cités, la mise en oeuvre, de préférence par logiciel, de cycles d'hystérésis, plutôt que de seuils simples, permet d'éviter les instabilités. Il est bien entendu possible de réaliser ces fonctions à l'aide de régulateurs à hystérésis, mais il est plus avantageux de les réaliser par logiciel, car la logique correspondante est facile à programmer et ceci évite l'ajout de composants.

La Figure 6 représente un organigramme de régulation simplifiée à deux fréquences qui tient compte à la fois de la tension de batterie V_{B} et de la température T. Selon cet organigramme, la fréquence F est fixée à 200 Hz lorsque V_{B} est inférieur à 12 V (et ce quelque soit alors la température). Lorsque V_{B} est inférieur ou égal à 12 V, F est fixé par défaut à 100 Hz. On teste alors la température intérieure Ti de l'habitacle. Si Ti est inférieure à T₀, alors F prend la valeur 200 Hz (pour diminuer le couple C), sinon F reste égal à 100 Hz.

La Figure 7 illustre le cas d'une commande selon trois valeurs possibles de la fréquence F, à savoir Fo, F₁ et F₂ avec F₀ < F₁ < F₂. Les domaines de fréquence sont délimités de la manière suivante. La séparation entre les domaines à la fréquence F₁ et F₂ est réalisée comme représenté par un segment de droite d'abscisse T₀ et par un segment de droite d'ordonnée V'. La séparation entre les domaines à la fréquence F₁ et F₀ est réalisée par un segment de droite d'abscisse T' et par un segment de droite d'ordonnée V₀. On a par exemple : T₀ = -18°C, T' = 50°C, V₀ = 10 V et V' = 14 V.

On introduit avantageusement une hystérésis dans la logique comme représenté à la Figure 8.

L'invention telle que décrite ci-dessus permet d'adapter le couple de sortie du ou des moteurs aux besoins spécifiques de la fonction qu'ils remplissent et aux conditions opératoires. L'adaptation de la fréquence de pilotage, réalisée de préférence par commutation entre des valeurs discrètes de la fréquence de pilotage permet de diminuer le rapport entré les valeurs extrêmes du couple délivré par le moteur, et donc d'éviter certains inconvénients tels qu'un couple trop élevé à froid alors qu'un organe tel qu'un volet peut être accidentellement bloqué ("collé") sur une butée, ou bien encore un couple trop faible à température élevée, non susceptible de produire le déplacement de l'organe mobile. L'invention introduit en outre une souplesse de conception qui permet de généraliser l'utilisation des moteurs unipolaires dont le coût de fonction est faible, tout en garantissant une bonne fiabilité en raison de l'adaptation de la valeur du couple appliqué. L'invention est également susceptible de mettre en oeuvre des moteurs unipolaires de moindre puissance, tout en satisfaisant aux conditions extrêmes de fonctionnement. En outre, la mise en oeuvre de valeurs discrètes simplifie la logique de commande. La plus grande simplicité est obtenue en choisissant les valeurs des fréquences comme étant les multiples l'une de l'autre ou les unes des autres, ce qui permet de les générer par une simple division de fréquence.

Un autre moyen est de les choisir comme des sous-multiples d'une fréquence, telle que la fréquence de l'horloge du micro-processeur du dispositif de commande COM.

## Revendications

1. Dispositif de chauffage, ventilation et/ou climatisation comportant au moins un organe mobile dont le déplacement est commandé par un moteur unipolaire alimenté par un dispositif de commande **caractérisé en ce que** le dispositif de commande (COM) présente une entrée (R1) de réception d'un signal représentatif d'une température et une entrée (E2) d'un signal représentatif de la tension d'une batterie d'alimentation (BAT) et **en ce qu'**il présente au moins une sortie (S1. S2) pour générer une fréquence (F) de pilotage du moteur unipolaire (M1, M2) qui dépend du niveau desdits signaux représentatifs.

2. Dispositif selon la revendication 1, **caractérisé en ce que** la fréquence de pilotage présente au moins deux valeurs discrètes pour au moins deux domaines de niveau de température et/ou de tension.

3. Dispositif selon la revendication 2, **caractérisé en ce que** le dispositif de commande génère au moins un cycle d'hystérésis de température et **en ce qu'**au moins deux domaines de niveau de température sont délimités pour un dit cycle d'hystérésis entre un seuil bas d'hystérésis et un seuil haut d'hystérésis.

4. Dispositif selon une des revendications 2 ou 3, **caractérisé en ce que** le dispositif génère au moins un cycle d'hystérésis relatif à la tension de batterie et **en ce qu'**au moins deux domaines de niveau de tension de batterie sont délimités par un dit cycle d'hystérésis entre un seuil bas d'hystérésis et un seuil haut d'hystérésis.

5. Dispositif selon une des revendications précédentes, **caractérisé en ce qu'**au moins deux fréquences de pilotage sont multiples l'une de l'autre.

6. Dispositif selon une des revendications précédentes, **caractérisé en ce que** ledit signal de température correspond à la température extérieure (Te).

7. Dispositif selon une des revendications 1 à 5, **caractérisé en ce que** ledit signal de température correspond à la température (Ti) de l'intérieur de l'habitacle d'un véhicule automobile.

8. Dispositif selon une des revendications 1 à 5, **caractérisé en ce que** ledit signal- de température correspond à une estimation de la température (Ti) de l'intérieur de l'habitacle d'un véhicule automobile.

## Patentansprüche

1. Heiz-, Lüftungs- und/oder Klimatisierungsvorrichtung, umfassend zumindest ein bewegliches Organ, dessen Versetzung durch einen Unipolarmotor gesteuert ist, der durch eine Steuereinrichtung gespeist ist, **dadurch gekennzeichnet, dass** die Steuereinrichtung (COM) einen Eingang (E1) zum Empfangen eines für eine Temperatur repräsentativen Signals und einen Eingang (E2) eines für die Spannung einer Versorgungsbatterie (BAT) repräsentativen Signal aufweist, und **dadurch**, dass sie zumindest einen Ausgang (S1, S2) zum Erzeugen einer Frequenz (F) zur Ansteuerung des Unipolarmotors (M1, M2), die von den Pegeln der repräsentativen Signale abhängt, aufweist.

2. Vorrichtung nach Anspruch 1, **dadurch gekennzeichnet, dass** die Ansteuerfrequenz zumindest zwei diskrete Werte für zumindest zwei Pegelbereiche der Temperatur und/oder der Spannung aufweist.

3. Vorrichtung nach Anspruch 2, **dadurch gekennzeichnet, dass** die Steuervorrichtung zumindest einen Temperaturhysteresekreis erzeugt und **dadurch**, dass zumindest zwei Temperaturpegelbereiche |für| einen solchen Hysteresekreis zwischen einem unteren Hystereseschwellenwert und einem oberen Hystereseschwellenwert begrenzt sind.

4. Vorrichtung nach einem der Ansprüche 2 oder 3, **dadurch gekennzeichnet, dass** die Vorrichtung zumindest einen auf die Spannung der Batterie bezogenen Hysteresekreis erzeugt und dass zumindest zwei Batteriespannungspegelbereiche durch einen solchen Hysteresekreis zwischen einem unterem Hystereseschwellenwert und einem oberen Hystereseschwellenwert begrenzt sind.

5. Vorrichtung nach einem der vorangehenden Ansprüche, **dadurch gekennzeichnet, dass** zumindest zwei Ansteuerfrequenzen Vielfache mit Bezug zueinander sind.

6. Vorrichtung nach einem der vorangehenden Ansprüche, **dadurch gekennzeichnet, dass** das Temperatursignal der Außentemperatur (Te) entspricht.

7. Vorrichtung nach einem der Ansprüche 1 bis 5, **dadurch gekennzeichnet, dass** das Temperatursignal der Innentemperatur (Ti) des Fahrgastraums eines Kraftfahrzeugs entspricht.

8. Vorrichtung nach einem der Ansprüche 1 bis 5, **dadurch gekennzeichnet, dass** das Temperatursignal einer Schätzung der Innentemperatur (Ti) des Fahrgastraums eines Kraftfahrzeugs entspricht.

## Claims

1. Heating, ventilation and/or air conditioning device comprising at least one movable member whose movement is controlled by a single-pole motor supplied by a control device, **characterised in that** the control device (COM) has an input (E1) receiving a signal representing a temperature and an input (E2) for a signal representing the voltage of a supply battery (BAT) and **in that** it has at least one output (S1, S2) for generating a control frequency (F) for the single-pole motor (M1, M2) that depends on the level of the said representative signals.

2. Device according to claim 1, **characterised in that** the control frequency has at least two discrete values for at least two temperature and/or voltage level ranges.

3. Device according to claim 2, **characterised in that** the control device generates at least one temperature histeresis cycle and **in that** at least two temperature level ranges are delimited by a said histeresis cycle between a low histeresis threshold and a high histeresis threshold.

4. Device according to one of claims 2 or 3, **characterised in that** the device generates at least one histeresis cycle relating to the battery voltage and **in that** at least two battery voltage level ranges are delimited by a said histeresis cycle between a low histeresis threshold and a high histeresis threshold.

5. Device according to one of the preceding claims, **characterised in that** at least two control frequencies are multiples of each other.

6. Device according to one of the preceding claims, **characterised in that** the said temperature signal corresponds to the external temperature (Te).

7. Device according to one of claims 1 to 5, **characterised in that** the said temperature signal corresponds to the temperature (Ti) of the inside of the cabin of a motor vehicle.

8. Device according to one of claims 1 to 5, **characterised in that** the said temperature signal corresponds to an estimation of the temperature (Ti) of the inside of the cabin of a motor vehicle.
